(19) Europäisches Patentamt
European Patent Office
Office européen des brevets

(11) Veröffentlichungsnummer : **0 125 209**
**B1**

(12) # EUROPÄISCHE PATENTSCHRIFT

(45) Veröffentlichungstag der Patentschrift : **29.07.87**

(51) Int. Cl.⁴ : **C 10 M137/10**, C 10 M153/00, C 07 F 9/165

(21) Anmeldenummer : **84810210.9**

(22) Anmeldetag : **03.05.84**

(54) **Schmierstoffzusammensetzungen.**

(30) Priorität : **09.05.83 CH 2525/83**

(43) Veröffentlichungstag der Anmeldung : **14.11.84 Patentblatt 84/46**

(45) Bekanntmachung des Hinweises auf die Patenterteilung : **29.07.87 Patentblatt 87/31**

(84) Benannte Vertragsstaaten : **DE FR GB IT**

(56) Entgegenhaltungen :
**EP-A- 0 083 123**
**FR-A- 2 077 086**
**FR-A- 2 375 318**
**GB-A- 1 347 845**

(73) Patentinhaber : **CIBA-GEIGY AG**
**Klybeckstrasse 141**
**CH-4002 Basel (CH)**

(72) Erfinder : **Zinke, Horst, Dr.**
**Berlinerweg 12**
**D-6101 Ernsthofen (DE)**
Erfinder : **Schumacher, Rolf, Dr.**
**Chemin de la Combettaz 40**
**CH-1723 Marly (CH)**

**EP 0 125 209 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Schmierstoffzusammensetzungen enthaltend Monothiophosphorsäureesterderivate.

Mineralischen und synthetischen Schmierstoffen werden im allgemeinen verschiedene Zusatzstoffe zur Verbesserung ihrer Gebrauchseigenschaften beigegeben. Insbesondere besteht ein Bedarf an Additiven, welche den Reibungskoeffizienten vermindern. An solche Additive wird ausserdem die Anforderung gestellt, dass sie das Lasttragevermögen des Schmierstoffs erhöhen, nicht korrodierend auf die zu schützenden Metallteile wirken und eine gute Thermobeständigkeit besitzen.

Verschiedenartige Schmierstoffzusätze wurden bereits vorgeschlagen, so beispielsweise verschiedene Dithiophosphorsäurederivate gemäss der DE-PS 2 104 041 und der DE-OS 2 756 488. Die Eigenschaften von solchen Additiven in Schmierölen sind vielfach nicht zufriedenstellend. Insbesondere ist die reibungsvermindernde Wirkung oder die Thermobeständigkeit nicht optimal.

Es wurde nun gefunden, dass bestimmte aschefreie Monothiophosphorsäureester der Formel 1, sowohl gegenüber den Zinkdithiophosphaten als auch gegenüber entsprechenden metallfreien Dithiophosphaten, in mineralischen und synthetischen Schmierstoffen eine deutlich bessere reibungsvermindernde Wirkung im Mischreibungsgebiet bei höherer Temperatur aufweisen.

Die Erfindung betrifft demgemäss Schmierstoffzusammensetzungen enthaltend

a) ein mineralisches und/oder ein synthetisches Basisöl und
b) mindestens eine Verbindung der Formel I

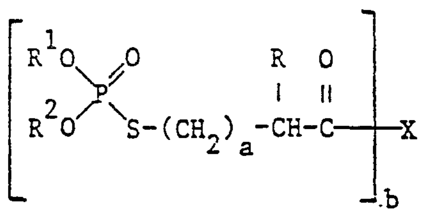

(I)

in welcher
a die Zahl 0 oder 1 und
b eine ganze Zahl von 1 bis 6 darstellen,
R —H, —$CH_3$, —COOH, $C_2$-$C_{13}$ Alkoxycarbonyl, wobei der Rest Alkyl durch ein oder zwei Sauerstoffatome unterbrochen sein kann, oder $C_6$-$C_{13}$ Cycloalkoxycarbonyl bedeutet, und
$R^1$ und $R^2$ unabhängig voneinander $C_3$-$C_{12}$ Alkyl, das durch ein oder zwei Sauerstoff- oder Schwefelatome unterbrochen sein kann, $C_5$-$C_{12}$ Cycloalkyl, unsubstituiertes oder durch eine bis drei $C_1$-$C_{12}$ Alkylgruppen substituiertes Phenyl, oder $C_7$-$C_9$ Phenylalkyl sind, ferner $R^1$ und $R^2$ zusammen einen bifunktionellen Rest der Formel II

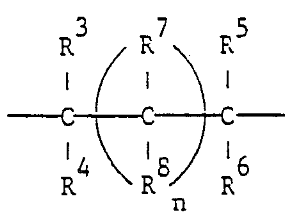

(II)

bilden, wobei
n 0 oder 1 ist,
$R^3$, $R^4$, $R^5$ und $R^6$ unabhängig voneinander —H, $C_1$-$C_4$ Alkyl, $C_5$-$C_{12}$ Cycloalkyl oder Phenyl, und
$R^7$ und $R^8$ unabhängig voneinander —H, $C_1$-$C_4$ Alkyl, Phenyl, —$NO_2$, $C_2$-$C_{19}$ Alkoxycarbonyl oder $C_6$-$C_{13}$ Cycloalkoxycarbonyl bedeutet, oder $R^7$ und $R^8$ zusammen mit dem Kohlenstoffatom, an das sie gebunden sind, einen Cyclopentenyl- oder Cyclohexenylring bilden,
X bei $b = 1$ —$OR^9$ oder —$N(R^{10})(R^{11})$ ist, wobei $R^9$ —H, $C_1$-$C_{22}$ Alkyl, $C_5$-$C_{12}$ Cycloalkyl oder Phenyl, und $R^{10}$ und $R^{11}$, unabhängig voneinander —H, unsubstituiertes oder durch ein oder zwei Sauerstoffatome unterbrochenes $C_1$-$C_{22}$ Alkyl, $C_2$-$C_{22}$ Alkenyl oder $C_5$-$C_{12}$ Cycloalkyl bedeuten, oder $R^{10}$ und $R^{11}$ zusammen mit dem Stickstoffatom, an das sie gebunden sind, einen $C_2$-$C_{22}$ Alkylen- oder $C_2$-$C_{22}$ Alkenylenring bilden, der durch Sauerstoff-, Schwefel- und/oder Stickstoffatome unterbrochen sein kann, und
X bei $b > 1$, einen mehrwertigen Rest der Formeln —$OC_mH_{2m}O$—, wobei die $C_mH_{2m}$-Gruppe durch ein oder 2 Sauerstoff- oder Schwefelatome unterbrochen sein kann, —$OCH_2$—$C(R^{12})(R^{13})$—$CH_2O$—,

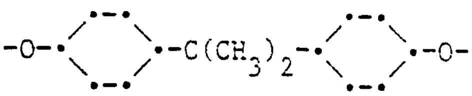
,

$(-OCH_2)_3C-R^{14}$, $(-OCH_2)_4C$ oder $(-OCH_2)_3C-CH_2-O-CH_2-C(CH_2O-)_3$ darstellt, wobei m eine ganze Zahl von 2 bis 40, und

$R^{12}$ und $R^{13}$ $C_1$-$C_4$ Alkyl, $C_2$-$C_9$ Alkoxycarbonyl, $C_6$-$C_{13}$ Cycloalkoxycarbonyl, Phenyl oder $-NO_2$ bedeuten, oder $R^{12}$ und $R^{13}$ zusammen mit dem Kohlenstoffatom, an das sie gebunden sind, einen Cyclopentenylring bilden, und $R^{14}$ $-CH_3$ oder $-C_2H_5$ darstellt.

$R^1$ bis $R^{13}$ können geradkettiges oder verzweigtes Alkyl sein, beispielsweise für $R^3$ bis $R^{13}$ Methyl, Aethyl, n-Propyl, Isopropyl, n-Butyl, sec.-Butyl und tert.-Butyl, für $R^9$ im Rest $-OR^9$ und $R^{10}$ und $R^{11}$ ausserdem n-Pentyl, tert.-Pentyl, n-Hexyl, 1- und 6-Methylpentyl, n-Octyl, 2-Aethylhexyl, 1,1-Dimethylhexyl, n-Decyl, n-Dodecyl, 2-Aethyldecyl, 1,1,7,7-Tetramethyloctyl, n-Tetradecyl, n-Hexadecyl, n-Octadecyl und Eikosyl, insbesonders aber für $R^9$ $C_1$-$C_{13}$ Alkyl.

Stehen $R^1$ und $R^2$ für $C_3$-$C_{12}$ Alkyl, so kann es sich um dieselben bereits genannten Reste mit 3 bis 12 C-Atomen handeln.

Sind $R^1$ und $R^2$ durch ein oder zwei Sauerstoff- oder Schwefelatome substituiertes Alkyl, so handelt es sich dabei beispielsweise um Alkoxyalkyl- und Alkylthioalkylgruppen, insbesondere um Alkoxyalkyl mit insgesamt 3-12 C-Atomen, wie 2-Methoxyäthyl, 2-Aethoxyäthyl, 2-n-Propoxyäthyl, 2-Isopropoxyäthyl, 2-n-Butoxyäthyl, 2-n-Octoxyäthyl und Methoxypropyl, sowie um Diäthylenglykolmonoalkyläthergruppen wie β-Methoxyäthoxyäthyl, β-Aethoxyäthoxyäthyl und β-n-Butyloxyäthoxyäthyl. Insbesondere zu erwähnen sind Verbindungen in welchen $R^1$ und $R^2$ als Alkoxylalkyl 3-6 C-Atome enthalten. Sind $R^{10}$ und $R^{11}$ durch ein oder zwei Sauerstoffatome unterbrochenes Alkyl, so kann es sich um dieselben bereits genannten Reste handeln.

$R^1$, $R^2$, $R^3$ bis $R^6$, $R^{10}$ und $R^{11}$ können als $C_5$-$C_{12}$ Cycloalkyl z. B. Cyclopentyl, Cyclohexyl, Mono- und Dimethylcyclohexyl, Cyclooctyl, Cyclodecyl oder Cyclododecyl bedeuten, Bevorzugt ist Cyclohexyl.

$R^9$ als $C_5$-$C_{12}$ Cycloalkyl kann für dieselben bereits genannten Reste stehen, insbesondere aber für $C_6$-$C_9$ Cycloalkyl.

Sind $R^{10}$ und $R^{11}$ $C_2$-$C_{22}$ Alkenyl, so handelt es sich um geradkettige oder verzweigte Substituenten, die eine oder mehrere Doppelbindungen aufweisen, bevorzugt eine oder zwei, wie beispielsweise 2-Butenylen, 3-Butenylen, 4-Butenylen, 2-Pentenylen, 3-Pentenylen oder 4-Pentenylen.

Sind $R^1$ und $R^2$ durch eine bis drei Alkylgruppen substituiertes Phenyl, so handelt es sich beispielsweise um Methyl-, Aethyl-, Isopropyl-, n-Butyl, sec.-Butyl-, tert.-Butyl-, tert.-Pentyl-, n-Hexyl-, n-Octyl-, 1,1,3,3-Tetramethylbutyl- oder 1,1,3,3,5,5-Hexamethylhexylgruppen.

Sind $R^1$ und $R^2$ $C_7$-$C_9$ Phenylalkyl, so kann es sich um α,α-Dimethylbenzyl, β-Phenyläthyl und insbesondere um Benzyl handeln. $R^7$ und $R^8$ sind als $C_2$-$C_{19}$ Alkoxycarbonyl beispielsweise Methoxycarbonyl, Aethoxycarbonyl, Butoxycarbonyl, Hexoxycarbonyl, Octoxycarbonyl, Dodecyloxycarbonyl oder Octadecyloxycarbonyl. Bevorzugte Alkoxycarbonylgruppen enthalten 2 bis 9 C-Atome, insbesondere aber 2 bis 5 C-Atome.

Sind R, $R^{12}$ und $R^{13}$ $C_2$-$C_{13}$ bzw. $C_2$-$C_9$ Alkoxycarbonyl, so kann es sich um dieselben bereits genannten Reste mit 2 bis 13 C- bzw. 2- bis 9 C-Atomen handeln. Bevorzugt ist $C_2$-$C_5$ Alkoxycarbonyl. Sind R, $R^7$, $R^8$, $R^{12}$ und $R^{13}$ $C_6$-$C_{13}$ Cycloalkoxycarbonyl, so handelt es sich dabei beispielsweise um Cyclopentoxy- Cyclohexoxy-, Trimethylcyclohexoxy- oder Cycloheptoxycarbonyl, insbesondere aber um Cyclohexoxycarbonyl.

Steht X für $-OC_mH_{2m}O-$, so handelt es sich für den Rest $C_mH_{2m}$ beispielsweise um Aethylen, Propylen-1,2, 3-Methylpropylen-1,3, Butylen-1,4, Pentylen-1,5, Hexamethylen-1,6, 2-Methyläthylen, 2-Aethyläthylen, 2-Eikosyläthylen, 1,2-Dimethyläthylen, 1,1,2,2-Tetramethyläthylen, 3-Methylpentylen-1,3 oder 3-tert.-Butylpentylen-1,3. Ist dieser Rest $-OC_mH_{2m}O-$ durch Sauerstoff- oder Schwefelatome unterbrochen, so handelt es sich beispielsweise um $[-O-CH(CH_3)-CH_2-]_2-O$, $[-O-CH(CH_3)-CH_2-]_2-S$ oder $-OC_2H_4OC_2H_4OC_2H_4O-$.

$R^7$ und $R^8$ zusammen mit dem C-Atom, an das sie gebunden sind, sind beispielsweise 2- oder 3-Cyclopentenyl-1 oder 3-Cyclohexenyl-1.

$R^{10}$ und $R^{11}$ bilden zusammen als $C_2$-$C_{22}$ Alkylen oder $C_2$-$C_{22}$ Alkenylen mit dem N-Atom, an das sie gebunden sind, einen Ring, wobei der Ring durch ein oder mehrere Atome aus der Gruppe : Sauerstoff, Schwefel oder Stickstoff unterbrochen sein kann. Hierbei können der Alkylen- oder der Alkenylenteil des Ringes gegebenenfalls ein- oder mehrfach durch $C_1$-$C_4$ Alkyl substituiert sein, wie $C_1$-$C_4$ alkyliertes Butylen-1,4 oder Pentylen-1,5, insbesondere methyliertes Butylen-1,4 oder Pentylen-1,5. Der Alkenylenteil des Ringes kann ein oder zwei Doppelbindungen aufweisen und beispielsweise 2-Butenylen, 3-Butenylen, 4-Butenylen, 2-Pentenylen, 3-Pentenylen oder 4-Pentenylen sein. Ist ein derartiger heterocyclischer Ring ausserdem durch zusätzliche O—, S— und/oder N-Atome unterbrochen, so handelt es sich zusammen mit dem $R^{10}$ und $R^{11}$ bindenden N-Atom insbesondere um Morpholino, Thiomorpholino, Piperazino, 4-Methyl-piperazino, Pyrazol, Imidazol, 1,2,3-Triazol, 1,2,4-Triazol, Tetrazol, 2-Imidazolin, 4-Imidazolin, 2H,6H-1,5,2-Dithiazin, Pyralin, 3-Pyrazolin oder 2-Pyrazolin.

Bevorzugt sind solche Schmierstoffzusammensetzungen, welche mindestens eine Verbindung der Formel I enthalten, in welcher a die Zahl O und b eine ganze Zahl von 1 bis 4 darstellen, R —H oder $C_2$-$C_5$ Alkoxycarbonyl und $R^1$ und $R^2$ unabhängig voneinander $C_3$-$C_{12}$ Alkyl, das durch ein oder zwei Sauerstoffatome unterbrochen sein kann, Cyclohexyl, unsubstituiertes oder durch eine bis drei $C_1$-$C_{12}$ Alkylgruppen substituiertes Phenyl, oder Benzyl bedeuten, ferner $R^1$ und $R^2$ zusammen einen bifunktionellen Rest der Formel II

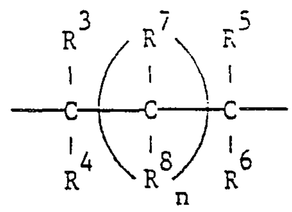

(II)

bilden, wobei

n die Zahl 0 oder 1 ist, $R^3$, $R^4$, $R^5$ und $R^6$ unabhängig voneinander —H, —$CH_3$, oder —$C_2H_5$ bedeuten,

$R^7$ und $R^8$ unabhängig voneinander —H, $C_1$-$C_4$ Alkyl, Phenyl, —$NO_2$ oder $C_2$-$C_9$ Alkoxycarbonyl bedeuten, oder $R^7$ und $R^8$ zusammen mit dem Kohlenstoffatom, an das sie gebunden sind, einen Cyclohexenylring bilden, und

X bei b = 1 —$OR^9$ oder —$N(R^{10})(R^{11})$ bedeutet, wobei $R^9$ —H, $C_1$-$C_{13}$ Alkyl oder $C_6$-$C_9$ Cycloalkyl und $R^{10}$ und $R^{11}$ —H bedeuten, oder $R^{10}$ und $R^{11}$ zusammen mit dem Stickstoffatom, an das sie gebunden sind, einen $C_4$-$C_6$ Alkylenring bilden, der durch ein Sauerstoff-, Schwefel- oder Stickstoffatom unterbrochen sein kann und

X bei $b > 1$ einen mehrwertigen Rest der Formel —$OC_mH_{2m}O$—, wobei die $C_mH_{2m}$-Gruppe durch ein oder zwei Sauerstoff- oder Schwefelatome unterbrochen sein kann und m eine Zahl von 4 bis 6 ist, ferner X —$OCH_2$—$C(R^{12})(R^{13})$—$CH_2O$—, (—$OCH_2)_3C$—$R^{14}$ oder (—$OCH_2)_4C$ bedeutet, wobei $R^{12}$ und $R^{13}$ $C_1$-$C_4$ Alkyl oder $C_2$-$C_4$ Alkoxycarbonyl sind, oder $R^{12}$ und $R^{13}$ zusammen mit dem Kohlenstoffatom, an das sie gebunden sind, einen Cyclopentenylring darstellen, und $R^{14}$ —$CH_3$ oder —$C_2H_5$ bedeuten.

Besonders bevorzugt sind solche Schmierstoffzusammensetzungen, welche mindestens eine Verbindung der Formel I enthalten, in welcher a und b die oben angegebene Bedeutung haben, R —H und $R^1$ und $R^2$ unabhängig voneinander $C_3$-$C_{12}$ Alkyl, Cyclohexyl oder unsubstituiertes oder durch 1 bis drei $C_1$-$C_{12}$ Alkylgruppen substituiertes Phenyl bedeuten, oder $R^1$ und $R^2$ zusammen einen bifunktionellen Rest der Formel II bedeuten, wobei

n die Zahl 1, $R^3$, $R^4$, $R^5$ und $R^6$ —H und

$R_7$ und $R^8$ $C_1$-$C_4$ Alkyl oder $C_2$-$C_3$ Alkoxycarbonyl darstellen, und

X bei b = 1 —$OR^9$ oder —$N(R^{10})(R^{11})$ bedeutet, wobei $R^9$ —H, $C_1$-$C_{13}$ Alkyl oder $C_6$-$C_9$ Cyclohexyl und

$R^{10}$ und $R^{11}$ —H bedeuten, oder $R^{10}$ und $R^{11}$ zusammen mit dem Stickstoffatom, an das sie gebunden sind, Morpholino, Thiomorpholino, Piperazino oder 4-Methylpiperazino bedeuten, und

X bei $b > 1$ einen mehrwertigen Rest der Formeln —$OC_mH_{2m}O$—, (—O—$C_2H_4)_2O$ oder (—$OCH_2)_4C$ darstellt, wobei m eine ganze Zahl von 4 bis 6 ist.

Ebenfalls bevorzugt sind Verbindungen der Formel I, worin X bei b = 1 —$OR^9$ und X bei $b > 1$ einen mehrwertigen Rest der Formeln —$OC_mH_{2m}O$—, —$OCH_2$—$C(R^{12})(R^{13})$—$CH_2O$—,

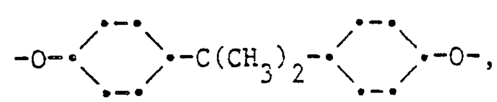

(—$OCH_2)_3C$—$R^{14}$, (—$OCH_2)_4C$ oder (—$OCH_2)_3C$—$CH_2$—O—$CH_2$—$C(CH_2O$—$)_3$ darstellt, und $R^9$, $R^{12}$, $R^{13}$, $R^{14}$ und m die auf Seite 3 angegebene Bedeutung haben. Dabei ist b bevorzugt die Zahl 1.

Als nicht limitierende Beispiele für Verbindungen der Formel I sind solche, in welchen die Symbole folgende Bedeutung haben :

(Siehe Tabelle Seite 5 ff.)

| $R^1$ | $R^2$ | a | R | b | X |
|---|---|---|---|---|---|
| 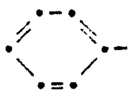 | 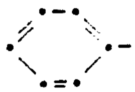 | 1 | -H | 1 | $-OC_2H_5$ |
| $-C_3H_7$(i) | $-C_3H_7$(i) | 1 | -H | 1 | $-OC_2H_5$ |
| $-C_3H_7$(i) | $-C_3H_7$(i) | 1 | -H | 2 | $-OCH_2CH_2O-$ |
| $-C_8H_{17}$(i) | $-C_8H_{17}$(i) | 1 | -H | 1 | $-NH_2$ |
| 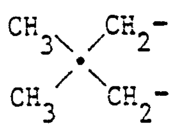 | | 1 | $-CH_3$ | 1 | $-OC_2H_5$ |
| 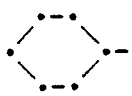 | 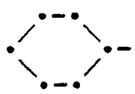 | 1 | -H | 1 | $-O-C_4H_9$(n) |
| 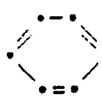 $-CH_2-$ | 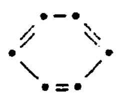 $-CH_2-$ | 1 | $-COOC_2H_5$ | 1 | $-OC_2H_5$ |
| 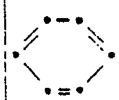 $-(CH_2)_3-$ | 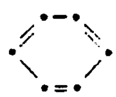 $-(CH_2)_3-$ | 0 | -H | 1 | $-O-C_6H_{13}$(n) |
| $H_5C_2OC_2H_4-$ | $H_5C_2OC_2H_4-$ | 0 | -H | 1 | $-O-C_8H_{17}$(n) |
| $H_5C_2SC_2H_4-$ | $H_5C_2SC_2H_4-$ | 0 | -H | 1 | 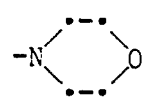 |
| $-C_3H_7$(i) | $-C_3H_7$(i) | 0 | -H | 1 | 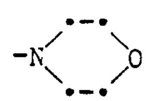 |
| $H_{19}C_9-$ 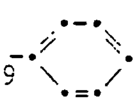 | $H_{19}C_9-$ 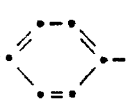 | 0 | -H | 1 | $-OC_2H_5$ |

(Fortsetzung)

| $R_1$ | $R_2$ | a | R | b | X |
|---|---|---|---|---|---|
| $-C_8H_{17}(n)$ | $-C_8H_{17}(n)$ | 0 | -H | 1 | 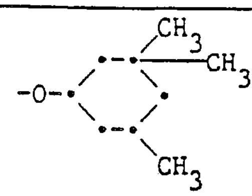 |
| 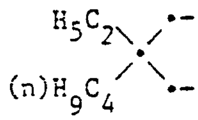 | | 0 | $-COOC_2H_5$ | 1 | $-OC_2H_5$ |
| $-C_4H_9(i)$ | $-C_4H_9(i)$ | 0 | -H | 1 | $-OC_2H_5$ |
| 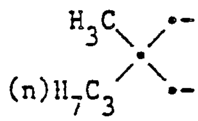 | | 0 | -H | 2 | $-OC_2H_4-S-C_2H_4O-$ |
| 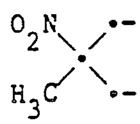 | | 0 | -H | 1 | $-OC_4H_9(t)$ |
| $-C_{12}H_{25}(n)$ | $-C_{12}H_{25}(n)$ | 0 | -H | 1 | $-OC_2H_5$ |
| $-C_3H_7(n)$ | $-C_3H_7(n)$ | 0 | -H | 2 | 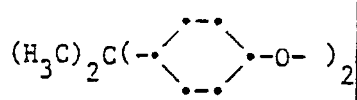 |
| $-C_4H_9(i)$ | $-C_4H_9(i)$ | 0 | -H | 3 | 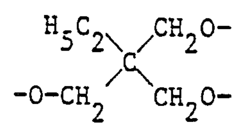 |
| 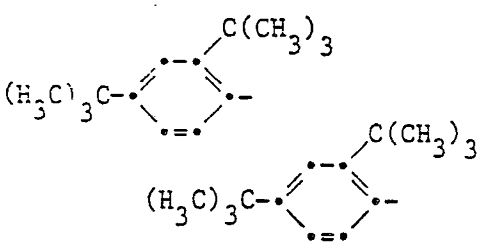 | | 0 | -H | 1 | 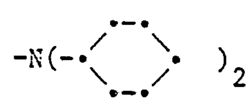 |
| $-C_5H_{11}(n)$ | $-C_5H_{11}(n)$ | 0 | -H | 1 | 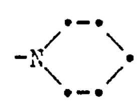 |
| $-C_6H_{13}(n)$ | $-C_6H_{13}(n)$ | 0 | -H | 1 | 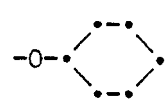 |

Mehrere Verbindungen der Formel I sind bekannte Produkte. Ihre Herstellung erfolgt nach an sich bekannten Verfahren, beispielsweise gemäss den allgemeinen Verfahren, welche in « Houben-Weyl, Methoden der Organischen Chemie », Band 12, Teil 2, S. 652-681, (Thieme Verlag, 1964) beschrieben sind.

Ausgehend von entsprechenden Alkoholen oder Diolen werden durch Umsetzung mit $PCl_3$ entweder direkt oder über die nachfolgende Umsetzung der zuerst isolierten Chlorphosphite mit Wasser, zunächst die jeweiligen offenkettigen oder cyclischen Diphosphite der Formel III

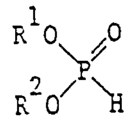

(III)

synthetisiert, welche durch Umsetzung mit Schwefel/$NH_3$ in einem inerten organischen Lösungsmittel über die leicht zugänglichen entsprechenden Ammonium-Monothiophosphate der Formel IV und durch anschliessende Reaktion mit der geeigneten Halogenverbindung die Monothiophosphorsäureester der Formel I liefern. Das nachstehende Reaktionsschema illustriert die Reaktion für den Fall b = 1 :

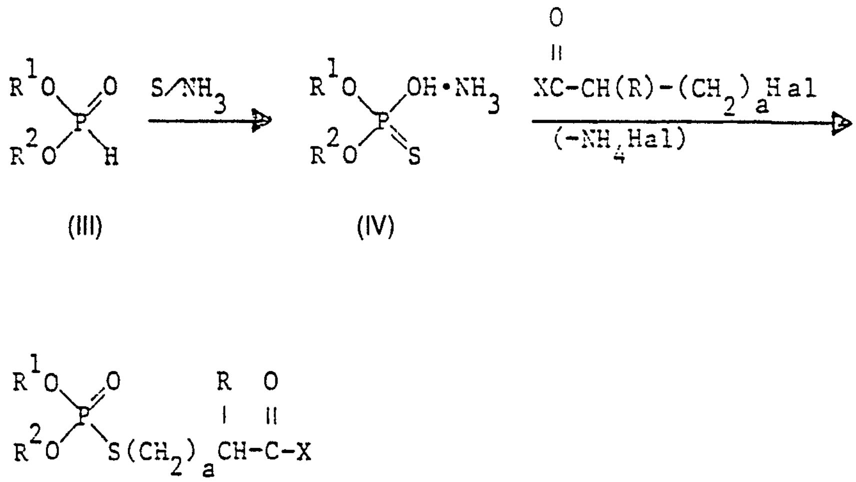


(III) (IV)

(I)

In den Formeln I, III und IV haben R, $R^1$, $R^2$, X und a die oben angegebene Bedeutung. Hal steht für Halogen und bedeutet vorzugsweise Chlor oder Brom.

Die Reaktion von 1,3-Diolen kann vorteilhaft auch durch direkte Veresterung der Diole mit $H_3PO_3$ (phosphoriger Säure) zu den entsprechenden Verbindungen der Formel III durchgeführt werden.

Andere Verbindungen der Formel I sind neu und daher auch Gegenstand der Erfindung. Ihre Herstellung erfolgt in Analogie zu den für die bekannten Verbindungen angegebenen Verfahren. Neue Zwischenprodukte der Formeln III und IV stellen daher auch einen Gegenstand der vorliegenden Erfindung dar.

Die Verbindungen der Formel I können roh eingesetzt werden, so wie sie bei ihrer Synthese ausfallen. Sie können auch vor ihrem Gebrauch als Schmierstoffzusatz gereinigt werden.

Werden mehrere Verbindungen der Formel I gleichzeitig erfindungsgemäss verwendet, so werden diese Verbindungen einzeln oder im Gemisch dem Basisöl zugemischt.

Die Verbindungen der Formel I wirken schon in sehr geringen Mengen als Hochdruck-Zusätze in Schmierstoffen. So zeigen mineralische und synthetische Schmieröle, sowie deren Gemische, welche mit 0,05 bis 5 Gew.-%, bezogen auf den Schmierstoff, und vorzugsweise 0,1 bis 3 Gew.-% einer Verbindung der Formel I ausgestattet sind, ausgezeichnete Hochdruck-Schmiereigenschaften. So zeichnen sich die erfindungsgemässen Schmierstoffzusammensetzungen insbesondere durch ein gutes Lasttragevermögen, gute Verschleissschutzeigenschaften, und eine gute reibungsvermindernde Wirkung aus. Zudem besitzen diese aschefreien Verbindungen eine gute Thermobeständigkeit.

Die in Frage kommenden Schmierstoffe sind dem Fachmann geläufig und z. B. im « Schmiermittel Taschenbuch » (Hüthig Verlag, Heidelberg, 1974) beschrieben.

Die Schmierölformulierung kann zusätzlich noch weitere Additive enthalten, die zwecks Verbesserung gewisser Gebrauchseigenschaften zugegeben werden. Dabei handelt es sich bevorzugt um Antioxidantien, Metallpassivatoren, Rostinhibitoren, Viskositätsindex-Verbesserer, Stockpunkterniedriger und Dispergierungsmittel/Detergentien, Verdicker sowie andere bekannte Antiverschleissmittel, Hochdruckmittel und Reibungsverminderer.

Die eingesetzte Menge dieser Zusätze ist nicht beschränkt. Sie hängt von der chemischen Struktur der Zusätze und vom Anwendungsgebiet ab und ist dem Fachmann bekannt. Vorzugsweise werden mehrere derartige Zusätze kombiniert, um optimale Eigenschaften zu erhalten.

Beispiele für Antioxidantien sind :

a) Alkylierte und nicht-alkylierte aromatische Amine und Mischungen davon z. B. Dioctyldiphenylamin, Mono-t-octylphenyl-α- und -β-naphthylamine, Phenothiazin, Dioctylphenothiazin, Phenyl-α-naphthylamin, N,N'-Di-sec.-butyl-p-phenylendiamin.

b) Sterisch gehinderte Phenole, z. B. 2,6-Di-tert.-butyl-p-cresol, 4,4'-Bis-(2,6)diisopropylphenol), 2,4,6-Triisopropylphenol, 2,2'-Thio-bis-(4-methyl-6-tert.-butylphenol), 4,4'-Methylen-bis-(2,6-di-tert.-butylphenol).

c) Alkyl-, Aryl- oder Alkaryl-phosphite, z. B. : Trinonylphosphit, Triphenylphosphit, Diphenyldecylphosphit.

d) Ester von Thiodipropionsäure oder Thiodiessigsäure, z. B. : Dilaurylthiodipropionat oder Dioctylthiodiacetat.

e) Salze von Carbamin- und Dithiophosphorsäuren, z. B. : Antimondiamyl-dithiocarbamat, Zinkdiamyldithiophosphat.

f) Kombination von zwei oder mehr Antioxidantien der obigen Additive, z. B. : ein alkyliertes Amin und ein sterisch gehindertes Phenol.

Beispiele für Metallpassivatoren sind :

a) für Kupfer, z. B. Benzotriazol, Tetrahydrobenzotriazol, 2-Mercaptobenzotriazol, 2,5-Dimercaptothiadiazol, Salicylidenpropylendiamin, Salze von Salicylaminoguanidin.

b) für Blei, z. B. Sebacinsäurederivate, Chinizarin, Propylgallat.

c) Kombination von zwei oder mehr der obigen Additive.

Beispiele für Rost-Inhibitoren sind :

a) Organische Säuren, ihre Ester, Metallsalze und Anhydride, z. B. : N-Oleyol-sarcosin, Sorbitanmono-oleat, Blei-naphthenat, Dodecenylbernsteinsäure-anhydrid.

b) Stickstoffhaltige Verbindungen, z. B. :

I. Primäre, sekundäre oder tertiäre aliphatische oder cycloaliphatische Amine und Amin-Salze von organischen und anorganischen Säuren, z. B. öllösliche Alkylammoniumcarboxylate.

II. Heterocyclische Verbindungen, z. B. : Substituierte Imidazoline und Oxazoline.

c) Phosphorhaltige Verbindungen, z. B. : Aminsalze von Phosphorsäure-partialestern.

d) Schwefelhaltige Verbindungen, z. B. : Barium-dinonylnaphthalin-sulfonate, Calciumpetroleumsulfonate.

e) Kombinationen von zwei oder mehr der obigen Additive.

Beispiele für Viskositätsindex-Verbesserer sind z. B. :

Polymethacrylate, Vinylpyrrolidon/Methacrylat-Copolymere, Polybutene, Olefin-Copolymere, Styrol/Acrylat-Copolymere.

Beispiele für Stockpunkterniedriger sind z. B. :

Alkylierte Naphthaline, alkylierte Phenole, Polymethacrylate.

Beispiele für Detergentien und Dispergierungsmittel

sind Polyalkenylbernsteinsäureimide, öllösliche Metallseifen wie Ca-, Ba-, Mg- und Al-Carboxylate, -Phenolate oder -Sulfonate.

Beispiele für andere Verschleisschutz-Additive sind z. B. :

Schwefel und/oder Phosphor und/oder Halogen enthaltende Verbindungen, wie geschwefelte vegetabilische Oele, Zinkdialkyldithiophosphate, Tritolyl-phosphat, chlorierte Paraffine, Alkyl- und Aryldisulfide.

Weiterer Gegenstand der Erfindung ist auch die Verwendung von Verbindungen der Formel I als Schmierstoffzusätze in Schmierstoffen, insbesondere in Schmierölen und -fetten.

Die erfindungsgemäss in Betracht gezogenen Verbindungen der Formel I zeichnen sich insbesondere durch ein gutes Reibverhalten im Mischreibungsgebiet bei höherer Temperatur aus. Zudem besitzen sie eine gute Thermostabilität und Aschefreiheit.

Die erfindungsgemässen Schmierstoffzusammensetzungen finden Anwendung insbesondere in Hydraulikölen, Getriebe- und Motorenölen, Schmierfetten sowie in Metallbearbeitungsölen.

Die folgenden Beispiele erläutern die Erfindung. Teile und Prozente bedeuten Gewichtsteile bzw. Gewichtsprozente.

Beispiel 1 : Thiophosphorsäure-O,O-dicyclohexylester (Ammoniumsalz)

Zu einer Lösung von 197 Teilen (0,8 Mol) Dicyclohexylphosphit in 800 ml i-Propanol werden 25, 65 Teile (0,8 Mol) Schwefel zugegeben und unter Rühren in mässigem Strom Ammoniak eingeleitet. Die Temperatur wird dabei durch Eiskühlung bei ca. 25 °C gehalten. Nachdem der Schwefel vollständig in Lösung gegangen ist, wird die $NH_3$-Zufuhr unterbrochen, eine Stunde bei Raumtemperatur und eine Stunde bei 40 °C nachgerührt. Nach Zugabe von 6 Teilen Aktivkohle wird klarfiltriert und das Lösungsmittel im Vakuum bis zur beginnenden Ausfällung des Ammoniumsalzes abdestilliert. Die ausgefallenen Kristalle werden abgesaugt, mit Petroläther gewaschen und bei 80 °C im Vakuum getrocknet. Dabei werden 191,9 Teile (81 % d. Th.) Thiophosphorsäure-O,O-dicyclohexylester als farblose Kristalle vom Schmelzpunkt 177-180 °C erhalten (als Ammoniumsalz).

Verbrennungsanalyse :
berechnet : N 4,74 P 10,49 S 10,86 %
gefunden : N 4,8 P 10,6 S 10,7 %.
$^{31}$P-NMR-Analyse (in ppm bez. auf $H_3PO_4$) : + 55,1 ppm.

Analog werden die in Tabelle 1 zusammengestellten Monothiophosphat-Ammonium-Salze hergestellt.

Tabelle 1

$$(RO)_2\underset{\underset{S}{\|}}{P}-OH\cdot NH_3$$

| Bsp. Nr. | R | Ausbeute (% d.Th) | Schmelzpunkt | $^{31}$P-NMR ppm/$H_3PO_4$ | Analyse: ber. / gef. [% P] | [% S] |
|---|---|---|---|---|---|---|
| 2 | $n-C_8H_{17}-$ | 67 % | 170-180°C | +57,7 | 8,71<br>8,7 | 9,02<br>9,1 |
| 3 | $C_6H_5-$ | 97 % | 108-113°C | +46,8 | 10,93<br>10,5 | 11,32<br>11,1 |
| 4 | $n-C_4H_9-$ | 83 % | 155-160°C | +57,7 | 12,73<br>12,8 | 13,18<br>12,9 |
| 5 | $n-C_3H_7-$ | 91 % | 151-155°C | +58,2 | 14,39<br>14,7 | 14,89<br>15,1 |
| 6 | $i-C_3H_7-$ | 84 % | 178-179°C | +53,6 | 14,39<br>14,5 | 14,89<br>15,3 |
| 7 | 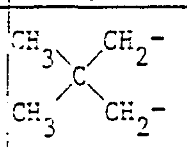 | 98 % | 225-226°C* | +55,3 | 15,55<br>15,4 | 16,1<br>16,0 |

* Nach Umkristallisation aus Petroläther/i-Propanol

Beispiel 8 : Thiophosphorsäure-O,O-diisopropyl-S-essigsäure-n-hexylester

Ein Gemisch aus 75, 36 Teilen (0,35 Mol) Ammonium-O,O-diisopropyl-thiophosphat (Beispiel 6) und 62, 55 Teilen (0,35 Mol) Chloressigsäure-n-hexylester in 600 ml Toluol wird innerhalb einer Stunde auf 90 °C aufgeheizt und 12 Stunden bei dieser Temperatur gerührt. Anschliessend wird vom ausgefallenen Ammoniumchlorid abfiltriert und die organische Phase mit Wasser/Natriumhydrogencarbonat und abschliessend mit Wasser gewaschen. Nach Trocknung der Lösung mit wasserfreiem Natriumsulfat wird das Lösungsmittel im Vakuum abdestilliert und der Rückstand im Oelpumpen-Vakuum bei

60 °C/6,65 · $10^{-2}$ mbar abdestilliert und dabei 113,75 Teile (96 % d. Th.) Thiophosphorsäure-O,O-diisopropyl-S-essigsäure-n-hexylester als farblose Flüssigkeit erhalten. Das so gewonnene Produkt wird durch Molekulardestillation bei 60 °C/6,65 · $10^{-3}$ — 1,33 · $10^{-2}$ mbar weiter aufgereinigt. Ausbeute : 91,8 Teile (77 % d. Th.), farblose Flüssigkeit mit einem Brechungsindex ($n_D^{20}$) vom 1,458 0.

$^{31}$P-NMR-Analyse : 22,8 ppm/$H_3PO_4$

Verbrennungsanalyse :

| | | | | |
|---|---|---|---|---|
| berechnet : | C 49,40 | H 8,59 | P 9,10 | S 9,42 % |
| gefunden : | C 49,37 | H 8,43 | P 9,12 | S 9,49 %. |

Analog werden die in Tabelle 2 zusammengestellten Monothiophosphatester der Formel I hergestellt. Ausnahme dazu ist das Beispiel 10, welches nach an sich bekannten Verfahren durch Addition von Thiophosphorsäure-O,O-diisopropylester an Acrylsäureäthylester hergestellt wird.

(Siehe Tabelle 2 Seite 11 ff.)

Tableau 2

| Bsp. Nr. | Monothiophosphorsäureester der Formel I | | | | | | Brechungs-index $n_D^{20}$ | Analyse: % P ber.: / gef.: | $^{31}$P-NMR, in ppm/$H_3PO_4$ |
|---|---|---|---|---|---|---|---|---|---|
| | $R^1$ | $R^2$ | a | R | b | X | | | |
| 9 | $n-C_6H_{13}-$ | $n-C_6H_{13}-$ | 0 | H- | 1 | $n-C_6H_{13}-O-$ | 1,4625 | 7,3 / 7,4 | + 25,7 |
| 10+) | $i-C_3H_7-$ | $i-C_3H_7-$ | 1 | H- | 1 | $C_2H_5O-$ | 1,4591 | 10,4 / 10,4 | + 24,3 |
| 11 | $i-C_3H_7-$ | $i-C_3H_7-$ | 0 | H- | 1 | HO- | 1,4681 | 12,1 / 11,9 | + 23,8 |
| 12 | $i-C_3H_7-$ | $i-C_3H_7-$ | 0 | $H_5C_2O_2C-$ | 1 | $C_2H_5O-$ | 1,4542 | 8,7 / 8,3 | + 20,6 |
| 13 | $i-C_8H_{17}-$ | $i-C_8H_{17}-$ | 0 | H- | 1 | $H_2N-$ | 1,4801 | 7,8 / 7,8 | - |
| 14 | $i-C_8H_{17}-$ | $i-C_8H_{17}-$ | 0 | H- | 1 | $C_2H_5O-$ | 1,4640 | 7,3 / 7,4 | + 25,7 |
| 15 | $i-C_8H_{17}-$ | $i-C_8H_{17}-$ | 0 | H- | 1 | $t-C_4H_9-O-$ | 1,4607 | 6,8 / 7,0 | + 26,0 |

+) Herstellung durch Addition von Thiophosphorsäure-O,O-diisopropylester an Acrylsäureäthylester.

Tabelle 2 (Fortsetzung)

| Bsp. Nr. | Monothiophosphorsäureester der Formel I | | | | | | Brechungs-index $n_D^{20}$ | Analyse: % P ber.: / gef.: | $^{31}$P-NMR, in ppm/$H_3PO_4$ |
|---|---|---|---|---|---|---|---|---|---|
| | $R^1$ | $R^2$ | a | R | b | X | | | |
| 16 | $n-C_{12}H_{25}-$ | $n-C_{12}H_{25}-$ | 0 | H- | 1 | $CH_3O-$ | 1,4663 | 5,9<br>5,5 | + 25,3 |
| 17 | 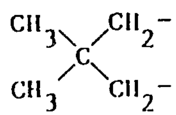 | | 0 | H- | 1 | $n-C_6H_{13}-O-$ | 1,4823 | 9,6<br>9,4 | + 17,6 |
| 18 | 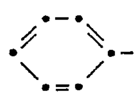 | 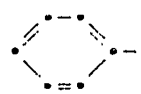 | 0 | H- | 1 | $i-C_8H_{17}O-$ | 1,5277 | 7,1<br>6.9 | + 18,5 |
| 19 | 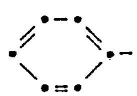 | 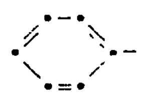 | 0 | H- | 1 | 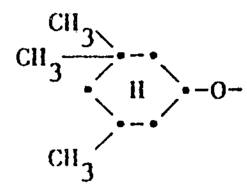 | 1,5386 | 6,9<br>6,7 | + 18,7 |
| 20 | 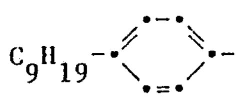 | 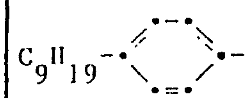 | 0 | H- | 1 | $C_2H_5O-$ | 1,5217 | 5,1<br>4,7 | + 18,6 |
| 21 | 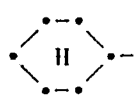 | 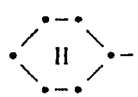 | 0 | H- | 1 | $n-C_6H_{13}-O-$ | 1,4896 | 7,4<br>7,4 | + 23,0 |

Tabelle 2 (Fortsetzung)

| Bsp. Nr. | Monothiophosphorsäurester der Formel I | | | | | | Brechungs-index $n_D^{20}$ | Analyse: % P ber.: / gef.: | $^{31}$P-NMR, in ppm/$H_3PO_4$ |
|---|---|---|---|---|---|---|---|---|---|
| | $R^1$ | $R^2$ | a | R | b | X | | | |
| 22 | $n-C_4H_9-$ | $n-C_4H_9-$ | 0 | H- | 4 | $C(CH_2-O-)_4$ | 1,4861 | 10,3 / 10,1 | + 25,2 |
| 23 | $i-C_8H_{17}-$ | $i-C_8H_{17}-$ | 0 | H- | 4 | $C(CH_2-O-)_4$ | 1,4808 | 7,5 / 7,5 | + 25,2 |
| 24 | 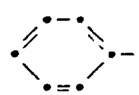 | 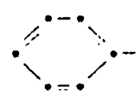 | 0 | H- | 1 | $n-C_6H_{13}O-$ | 1,5373 | 7,6 / 7,6 | + 19,5 |
| 25 | $i-C_8H_{17}-$ | $i-C_8H_{17}-$ | 0 | H- | 1 | 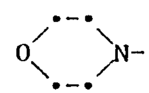 | 1,4870 | 6,7 / 6,6 | + 26,1 |
| 26 | $n-C_3H_7-$ | $n-C_3H_7-$ | 0 | H- | 1 | $n-C_6H_{13}-$ | 1,4604 | 9,1 / 9,2 | + 25,3 |

## Anwendungsbeispiele

### Beispiel 30

Zur Prüfung auf reibungsvermindernde Eigeschaften werden die nachstehend aufgeführten Verbindungen in ein nichtlegiertes Schmieröl (Viskosität : 139,3 $mm^2 \cdot sec^{-1}$/40 °C) eingearbeitet und mit Hilfe des SRV-Gerätes (Schwing-Reib-Verschleiss-Gerät der Firma Optimol-München, siehe diesbezüglich Lubrication Engineering, Vol. 39, Nr. 11, Nov. 1982, Advertising Index, cover 3, page 729) der Reibungskoeffizient bei 40 °C und 110 °C bestimmt.

Bei dem verwendeten Reibungsmessgerät wird eine oszillierende Kugel (50 Hz) mit einer Kraft von 200 N gegen ein fest eingespanntes Metallplättchen gepresst, auf dem sich das Prüföl befindet.

Horizontal- und Vertikalkräfte werden mit Hilfe eines piezoelektrischen Kraftaufnehmers gemessen und das resultierende Signal über einen Ladungsverstärker direkt auf einen Schreiber übertragen.

Die Prüfungsergebnisse sind in der folgenden Tabelle aufgeführt.

Tabelle 3 (Reibwertmessungen)

| Test Nr. | Additiv gemäss Bsp.Nr. | Prüfkonzentration* in % | Reibwertkoeffizient µ | |
|---|---|---|---|---|
| | | | 40°C | 110°C |
| 1 | keine | | 0.148 | 0,111 |
| 2 | 8 | 1,92 | 0,077 | 0,075 |
| 3 | 9 | 2,39 | | 0,070 |
| 4 | 17 | 1,83 | -** | 0,072 |
| 5 | 24 | 2,30 | 0,080 | 0,066 |
| 6 | 26 | 1,92 | | 0,054 |

* Prüfkonzentration entspricht einem P-Gehalt von 0,174 %, das heisst, die Konzentration der Additive wurde bewusst so gewählt, dass bei gleicher Phosphor-Konzentration gemessen wurde.

** Bei 40 °C keine ausreichende Löslichkeit.

Die erfindungsgemäss in Betracht gezogenen Monothiophosphorsäureester der Formel I zeigen gegenüber einem Basisöl, das keinen Zusatz enthält, im Mischreibungsgebiet sowohl bei tieferer (40 °C) als auch bei höherer (110 °C) Temperatur eine überlegene reibungsvermindernde Wirkung.

**Patentansprüche**

1. Schmierstoffzusammensetzung enthaltend

a) ein mineralisches und/oder ein synthetisches Basisöl und
b) mindestens eine Verbindung der Formel I

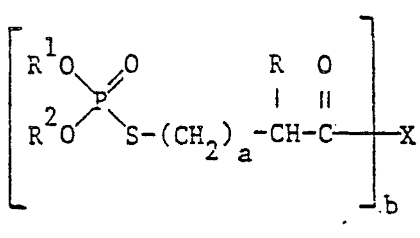

(I)

in welcher
a die Zahl 0 oder 1 und
b eine ganze Zahl von 1 bis 6 darstellen,
R —H, $—CH_3$, —COOH, $C_2$-$C_{13}$ Alkoxycarbonyl, wobei der Rest Alkyl durch ein oder zwei

Sauerstoffatome unterbrochen sein kann oder $C_6$-$C_{13}$ Cycloalkoxycarbonyl bedeutet, und

$R^1$ und $R^2$ unabhängig voneinander $C_3$-$C_{12}$ Alkyl, das durch ein oder zwei Sauerstoff- oder Schwefelatome unterbrochen sein kann, $C_5$-$C_{12}$ Cycloalkyl, unsubstituiertes oder durch eine bis drei $C_1$-$C_{12}$ Alkylgruppen substituiertes Phenyl, oder $C_7$-$C_9$ Phenylalkyl sind, ferner $R^1$ und $R^2$ zusammen einen bifunktionellen Rest der Formel II

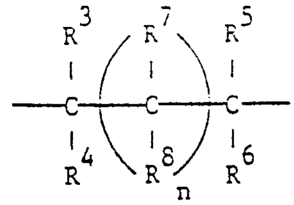

(II)

bilden, wobei

n 0 oder 1 ist,

$R^3$, $R^4$, $R^5$ und $R^6$ unabhängig voneinander —H, $C_1$-$C_4$ Alkyl, $C_5$-$C_{12}$ Cycloalkyl oder Phenyl, und

$R^7$ und $R^8$ unabhängig voneinander —H, $C_1$-$C_4$ Alkyl, Phenyl, —$NO_2$, $C_2$-$C_{19}$ Alkoxycarbonyl oder $C_6$-$C_{13}$ Cycloalkoxycarbonyl bedeuten, oder $R^7$ und $R^8$ zusammen mit dem Kohlenstoffatom, an das sie gebunden sind, einen Cyclopentenyl- oder Cyclohexenylring bilden,

X bei b = 1 —$OR^9$ oder —$N(R^{10})$ $(R^{11})$ ist, wobei $R^9$ —H, $C_1$-$C_{22}$ Alkyl, $C_5$-$C_{12}$ Cycloalkyl oder Phenyl, und $R^{10}$ und $R^{11}$, unabhängig voneinander —H, unsubstituiertes oder durch ein oder zwei Sauerstoffatome unterbrochenes $C_1$-$C_{22}$ Alkyl, $C_2$-$C_{22}$ Alkenyl oder $C_5$-$C_{12}$ Cycloalkyl bedeuten, oder $R^{10}$ und $R^{11}$ zusammen mit dem Stickstoffatom, an das sie gebunden sind, einen $C_2$-$C_{22}$ Alkylen- oder $C_2$-$C_{22}$ Alkenylenring bilden, der durch Sauerstoff-, Schwefel- oder Stickstoffatome unterbrochen sein kann, und

X bei $b > 1$, einen mehrwertigen Rest der Formeln —$OC_mH_{2m}O$—, wobei die $C_mH_{2m}$-Gruppe durch ein oder 2 Sauerstoff- oder Schwefelatome unterbrochen sein kann, —$OCH_2$—$C(R^{12})$ $(R^{13})$—$CH_2O$—,

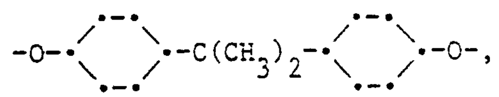

(—$OCH_2)_3C$—$R^{14}$, (—$OCH_2)_4C$ oder (—$OCH_2)_3C$—$CH_2$—O—$CH_2$—$C(CH_2O$—$)_3$ darstellt, wobei m eine ganze Zahl von 2 bis 40, und

$R^{12}$ und $R^{13}$ $C_1$-$C_4$ Alkyl, $C_2$-$C_9$ Alkoxycarbonyl, $C_6$-$C_{13}$ Cycloalkoxycarbonyl, Phenyl oder —$NO_2$ bedeuten, oder $R^{12}$ und $R^{13}$ zusammen mit dem Kohlenstoffatom, an das sie gebunden sind, einen Cyclopentenylring bilden, und $R^{14}$ —$CH_3$ oder —$C_2H_5$ darstellen.

2. Schmierstoffzusammensetzung nach Anspruch 1, dadurch gekennzeichnet, dass in der Verbindung der Formel I a die Zahl 0 und b eine ganze Zahl von 1 bis 4 darstellen, R —H oder $C_2$-$C_5$ Alkoxycarbonyl und $R^1$ und $R^2$ unabhängig voneinander $C_3$-$C_{12}$ Alkyl, das durch ein oder zwei Sauerstoffatome unterbrochen sein kann, Cyclohexyl, unsubstituiertes oder durch eine bis drei $C_1$-$C_{12}$ Alkylgruppen substituiertes Phenyl, oder Benzyl bedeuten, ferner $R^1$ und $R^2$ zusammen einen bifunktionellen Rest der Formel II

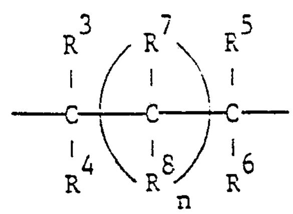

(II)

bilden, wobei

n die Zahl 0 oder 1 ist, $R^3$, $R^4$, $R^5$ und $R^6$ unabhängig voneinander —H, —$CH_3$, oder —$C_2H_5$ bedeuten,

$R^7$ und $R^8$ unabhängig voneinander —H, $C_1$-$C_4$ Alkyl, Phenyl, —$NO_2$ oder $C_2$-$C_9$ Alkoxycarbonyl bedeuten, oder $R^7$ und $R^8$ zusammen mit dem Kohlenstoffatom, an das sie gebunden sind, einen Cyclohexenylring bilden, und

X bei b = 1 —$OR^9$ oder —$N(R^{10})$ $(R^{11})$ bedeutet, wobei $R^9$ —H, $C_1$-$C_{13}$ Alkyl oder $C_6$-$C_9$ Cycloalkyl und $R^{10}$ und $R^{11}$ —H bedeuten, oder $R^{10}$ und $R^{11}$ zusammen mit dem Stickstoffatom, an das sie gebunden sind, einen $C_4$-$C_6$ Alkylenring bilden, der durch ein Sauerstoff-, Schwefel- oder Stickstoffatom unterbrochen sein kann und

X bei $b > 1$ einen mehrwertigen Rest der Formel —$OC_mH_{2m}O$—, wobei die $C_mH_{2m}$-Gruppe durch ein oder zwei Sauerstoff- oder Schwefelatome unterbrochen sein kann und m eine Zahl von 4 bis 6 ist,

ferner X $—OCH_2—C(R^{12})(R^{13})—CH_2O—$, $(—OCH_2)_3C—R^{14}$ oder $(—OCH_2)_4C$ bedeutet, wobei $R^{12}$ und $R^{13}$ $C_1$-$C_4$ Alkyl oder $C_2$-$C_4$ Alkoxycarbonyl sind, oder $R^{12}$ und $R^{13}$ zusammen mit dem Kohlenstoffatom, an das sie gebunden sind, einen Cyclopentenylring darstellen, und $R^{14}$ $—CH_3$ oder $—C_2H_5$ bedeuten.

3. Schmierstoffzusammensetzung nach Anspruch 2, dadurch gekennzeichnet, dass in der Verbindung der Formel I

a und b die im Anspruch 2 angegebene Bedeutung haben,

R —H und

$R^1$ und $R^2$ unabhängig voneinander $C_3$-$C_{12}$ Alkyl, Cyclohexyl oder unsubstituiertes oder durch 1 bis drei $C_1$-$C_{12}$ Alkylgruppen substituiertes Phenyl bedeuten, oder $R^1$ und $R^2$ zusammen einen bifunktionellen Rest der Formel II bedeuten, wobei n die Zahl 1, $R^3$, $R^4$, $R^5$ und $R^6$ —H und $R^7$ und $R^8$ $C_1$-$C_4$ Alkyl oder $C_2$-$C_3$ Alkoxycarbonyl darstellen, und

X bei b = 1 $—OR^9$ oder $—N(R^{10})(R^{11})$ bedeutet, wobei $R^9$ —H, $C_1$-$C_{13}$ Alkyl oder $C_6$-$C_9$ Cyclohexyl und $R^{10}$ und $R^{11}$ —H bedeuten, oder $R^{10}$ und $R^{11}$ zusammen mit dem Stickstoffatom, an das sie gebunden sind, Morpholino, Thiomorpholino, Piperazino oder 4-Methylpiperazino bedeuten, und

X bei $b > 1$ einen mehrwertigen Rest der Formeln $—OC_mH_{2m}O—$, $(—OC_2H_4)_2O$ oder $(—OCH_2)_4C$ darstellt, wobei m eine ganze Zahl von 4 bis 6 ist.

4. Schmierstoffzusammensetzung nach Anspruch 1, dadurch gekennzeichnet, dass in der Verbindung der Formel I X bei $b = 1$ $—OR^9$ und X bei $b > 1$ einen mehrwertigen Rest der Formeln $—OC_mH_{2m}O—$, $—OCH_2—C(R^{12})(R^{13})—CH_2O—$,

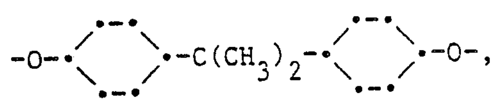

$(—OCH_2)_3C—R^{14}$, $(—OCH_2)_4C$ oder $(—OCH_2)_3C—CH_2—O—CH_2—C(CH_2O—)_3$ darstellt, wobei $R^9$, $R^{12}$, $R^{13}$, $R^{14}$ und m die im Anspruch 1 angegebene Bedeutung haben.

5. Schmierstoffzusammensetzung nach Anspruch 1, dadurch gekennzeichnet, dass in der Verbindung der Formel I b die Zahl 1 ist.

6. Schmierstoffzusammensetzung nach Anspruch 1, dadurch gekennzeichnet, dass das Basisöl a) 0,05 bis 5 Gew.-%, bezogen auf das Basisöl, der Verbindung der Formel I enthält.

7. Schmierstoffzusammensetzung nach Anspruch 1, dadurch gekennzeichnet, dass sie als weiteren Schmierstoffzusatz einen solchen aus der Reihe der Antioxidantien, Metallpassivatoren, Rostinhibitoren, Viskositätsindexverbesserer, Stockpunkterniedriger, Dispergierungsmittel, Detergentien oder Verdicker sowie weitere bekannte Antiverschleiss- und Hochdruckmittel und Reibungsverminderer, oder ein Gemisch mehrerer dieser Substanzen, enthält.

8. Verwendung von mindestens einer Verbindung der Formel I gemäss Anspruch 1 als Schmierstoffzusatz.

9. Verwendung gemäss Anspruch 8, wobei die Verbindungen der Formel I einzeln oder im Gemisch dem Basisöl zugemischt werden.

**Claims**

1. A lubricant composition containing

a) a mineral and/or synthetic base oil and
b) at least one compound of the formula I

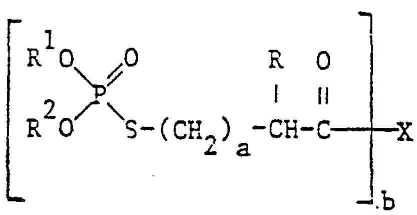

(I)

in which

a is 0 or 1,

b is an integer from 1 to 6,

R is —H, $—CH_3$, —COOH, $C_2$-$C_{13}$-alkoxycarbonyl, the alkyl radical of which may be interrupted by one or two oxygen atoms, or $C_6$-$C_{13}$-cycloalkoxycarbonyl, and

$R^1$ and $R^2$, independently of each other, are $C_3$-$C_{12}$-alkyl which may be interrupted by one or two oxygen or sulfur atoms, or $C_5$-$C_{12}$-cycloalkyl, phenyl which is unsubstituted or substituted by one to three

$C_1$-$C_{12}$-alkyl groups, or $C_7$-$C_9$-phenylalkyl, and $R^1$ and $R^2$ together are a bifunctional radical of the formula II

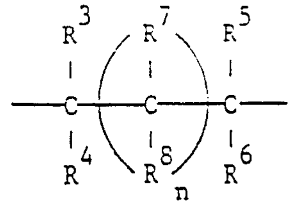

(II)

where

n is 0 or 1,

$R^3$, $R^4$, $R^5$ and $R^6$, independently of one another, are —H, $C_1$-$C_4$-alkyl, $C_5$-$C_{12}$-cycloalkyl or phenyl, and

$R^7$ and $R^8$, independently of each other, are —H, $C_1$-$C_4$-alkyl, phenyl, —$NO_2$, $C_2$-$C_{19}$-alkoxycarbonyl or $C_6$-$C_{13}$-cycloalkoxycarbonyl, or $R^7$ and $R^8$, together with the carbon atom to which they are bonded, are a cyclopentenyl or cyclohexenyl ring;

X, if b = 1, is —$OR^9$ or —$N(R^{10})(R^{11})$, where $R^9$ is —H, $C_1$-$C_{22}$-alkyl, $C_5$-$C_{12}$-cycloalkyl or phenyl, and $R^{10}$ and $R^{11}$, independently of each other, are —H, $C_1$-$C_{22}$-alkyl which is unsubstituted or interrupted by one or two oxygen atoms, or $C_2$-$C_{22}$-alkenyl or $C_5$-$C_{12}$-cycloalkyl, or $R^{10}$ and $R^{11}$, together with the nitrogen atom to which they are bonded, are a $C_2$-$C_{22}$-alkylene or $C_2$-$C_{22}$-alkenylene ring which may be interrupted by oxygen, sulfur and/or nitrogen atoms, and

X, if b > 1, is a polyvalent radical of the formula —$OC_mH_{2m}O$—, the $C_mH_{2m}$ group of which may be interrupted by one or 2 oxygen or sulfur atoms, or —$OCH_2$—$C(R^{12})(R^{13})$—$CH_2O$—,

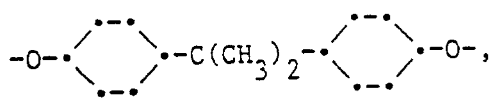

$(—OCH_2)_3C—R^{14}$, $(—OCH_2)_4C$ or $(—OCH_2)_3C—CH_2—O—CH_2—C(CH_2O—)_3$, where m is an integer from 2 to 40, and

$R^{12}$ and $R^{13}$ are each $C_1$-$C_4$-alkyl, $C_2$-$C_9$-alkoxycarbonyl, $C_6$-$C_{13}$-cycloalkoxycarbonyl, phenyl or —$NO_2$, or $R^{12}$ and $R^{13}$, together with the carbon atom to which they are bonded, are a cyclopentenyl ring, and $R^{14}$ is —$CH_3$ or —$C_2H_5$.

2. A lubricant composition according to claim 1, wherein, in the compound of the formula I, a is 0, b is an integer from 1 to 4, R is —H or $C_2$-$C_5$-alkoxycarbonyl, and $R^1$ and $R^2$, independently of each other, are $C_3$-$C_{12}$-alkyl which may be interrupted of each other, are $C_3$-$C_{12}$-alkyl which may be interrupted by one or two oxygen atoms, or cyclohexyl, phenyl which is unsubstituted or substituted by one to three $C_1$-$C_{12}$-alkyl groups, or benzyl, or $R^1$ and $R^2$ together are a bifunctional radical of the formula II

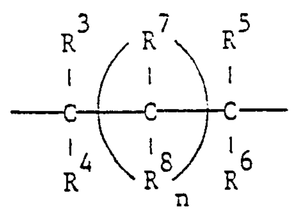

(II)

where

n is 0 or 1, $R^3$, $R^4$, $R^5$ and $R^6$, independently of one another, are —H, —$CH_3$ or —$C_2H_5$,

$R^7$ and $R^8$, independently of each other, are —H, $C_1$-$C_4$-alkyl, phenyl, —$NO_2$ or $C_2$-$C_9$-alkoxycarbonyl, or $R^7$ and $R^8$, together with the carbon atom to which they are bonded, are a cyclohexenyl ring, and

X, if b = 1, is —$OR^9$ or —$N(R^{10})(R^{11})$ where $R^9$ is —H, $C_1$-$C_{13}$-alkyl or $C_6$-$C_9$-cycloalkyl, and $R^{10}$ and $R^{11}$ are each —H, or $R^{10}$ and $R^{11}$, together with the nitrogen atom to which they are bonded, are a $C_4$-$C_6$-alkylene ring which may be interrupted by an oxygen, sulfur or nitrogen atom, and

X, if b > 1, is a polyvalent radical of the formula —$OC_mH_{2m}O$—, the $C_mH_{2m}$ group of which may be interrupted by one or two oxygen or sulfur atoms, and m is a number from 4 to 6, or X is —$OCH_2$—$C(R^{12})(R^{13})$—$CH_2O$—, $(—OCH_2)_3C—R^{14}$ or $(—OCH_2)_4C$, where $R^{12}$ and $R^{13}$ are each $C_1$-$C_4$-alkyl or $C_2$-$C_4$-alkoxycarbonyl, or $R^{12}$ and $R^{13}$, together with the carbon atom to which they are bonded, are a cyclopentenyl ring, and $R^{14}$ is —$CH_3$ or —$C_2H_5$.

3. A lubricant composition according to claim 2, wherein, in the compound of the formula I,

a and b are as defined in claim 2,

R is —H, and

$R^1$ and $R^2$, independently of each other, are $C_3$-$C_{12}$-alkyl, cyclohexyl, or phenyl which is

unsubstituted or substituted by 1 to three $C_1$-$C_{12}$-alkyl groups, or $R^1$ and $R^2$ together are a bifunctional radical of the formula II where n is 1, $R^3$, $R^4$, $R^5$, and $R^6$ are each —H and $R^7$ and $R^8$ are each $C_1$-$C_4$-alkyl or $C_2$-$C_3$-alkoxycarbonyl, and

X, if b = 1, is $-OR^9$ or $-N(R^{10})(R^{11})$ where $R^9$ is —H, $C_1$-$C_{13}$-alkyl or $C_6$-$C_9$-cyclohexyl and $R^{10}$ and $R^{11}$ are each —H, or $R^{10}$ and $R^{11}$, together with the nitrogen atom to which they are bonded, are morpholino, thiomorpholino, piperazino or 4-methylpiperazino, and

X, if b > 1, is a polyvalent radical of the formulae $-OC_mH_{2m}O-$, $(-OC_2H_4)_2O$ or $(-OCH_2)_4C$, where m is an integer from 4 to 6.

4. A lubricant composition according to claim 1, wherein, in the compound of the formula I, X, if b = 1, is $-OR^9$ and X, if b > 1, is a polyvalent radical of the formulae $-OC_mH_{2m}O-$, $-OCH_2-C(R^{12})(R^{13})-CH_2O-$,

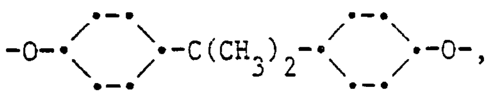

$(-OCH_2)_3C-R^{14}$, $(-OCH_2)_4C$ or $(-OCH_2)_3C-CH_2-O-CH_2-(CH_2O-)_3$, where $R^9$, $R^{12}$, $R^{13}$, $R^{14}$ and m are as defined in claim 1.

5. A lubricant composition according to claim 1, wherein, in the compound of the formula I, b is 1.

6. A lubricant composition according to claim 1, wherein said base oil a) contains 0.05 to 5 % by weight, based on the base oil, of the compound of the formula I.

7. A lubricant composition according to claim 1, which contains, as further lubricant additive, a lubricant additive from the series comprising antioxidants, metal passivators, rust inhibitors, viscosity index improvers, pour-point depressants, dispersants, detergents, thickeners, further known anti-wear and high-pressure agents and friction reducers, or a mixture of a number of these substances.

8. Use of at least one compound of the formula I according to claim 1 as lubricant additive.

9. Use according to claim 8, wherein the compounds of the formula I are mixed with the base oil either singly or in admixture with one another.

**Revendications**

1. Composition lubrifiante contenant :

a) une huile de base minérale et/ou une huile de base synthétique et
b) au moins un composé répondant à la formule I :

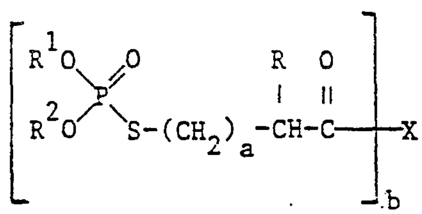

(I)

dans laquelle

a représente le nombre 0 ou le nombre 1,

b représente un nombre entier de 1 à 6,

R représente —H, $-CH_3$, —COOH, un radical alcoxycarbonyle en $C_2$-$C_{13}$ dont la partie alkyle peut être interrompue par un ou deux atomes d'oxygène, ou un radical cycloalcoxycarbonyle en $C_6$-$C_{13}$,

$R^1$ et $R^2$ représentent chacun, indépendamment l'un de l'autre, un alkyle en $C_3$-$C_{12}$, éventuellement interrompu par un ou deux atomes d'oxygène ou de soufre, un cycloalkyle en $C_5$-$C_{12}$, un phényle non substitué ou porteur d'un à trois alkyles en $C_1$-$C_{12}$, ou un phénylalkyle en $C_7$-$C_9$, ou encore $R^1$ et $R^2$ forment ensemble un radical bivalent répondant à la formule II :

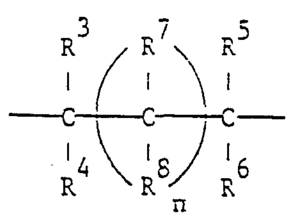

(II)

dans laquelle

n est égal à 0 ou à 1,

$R^3$, $R^4$, $R^5$ et $R^6$ représentent chacun, indépendamment les uns des autres, —H, un alkyle en $C_1$-$C_4$, un cycloalkyle en $C_5$-$C_{12}$ ou un phényle, et

$R^7$ et $R^8$ représentent chacun, indépendamment l'un de l'autre, —H, un alkyle en $C_1$-$C_4$, un phényle, —$NO_2$, un alcoxycarbonyle en $C_2$-$C_{19}$ ou un cycloalcoxycarbonyle en $C_6$-$C_{13}$, ou $R^7$ et $R^8$ forment ensemble, et avec l'atome de carbone auquel ils sont liés, un radical de cyclopentène ou de cyclohexène, et

X représente : quand b est égal à 1 : un radical —$OR^9$ ou un radical —$N(R^{10})(R_{11})$ dans lesquels $R^9$ représente —H, un alkyle en $C_1$-$C_{22}$, un cycloalkyle en $C_5$-$C_{12}$ ou un phényle, et $R^{10}$ et $R^{11}$ représentent chacun, indépendamment l'un de l'autre, —H, un alkyle en $C_1$-$C_{22}$ non substitué ou interrompu par un ou deux atomes d'oxygène, un alcényle en $C_2$-$C_{22}$ ou un cycloalkyle en $C_5$-$C_{12}$, ou $R^{10}$ et $R^{11}$ représentent ensemble un radical alkylène ou alcénylène en $C_2$-$C_{22}$ qui peut être interrompu par des atomes d'oxygène, de soufre et/ou d'azote et qui forme un cycle avec l'atome d'azote auquel $R^{10}$ et $R^{11}$ sont liés, et

quand b est supérieur à 1 : un radical multivalent de formule —$OC_mH_{2m}O$— dans lequel m est un nombre entier de 2 à 40 et dont la partie —$C_mH_{2m}$— peut être interrompue par un ou deux atomes d'oxygène ou de soufre, ou de formules —$OCH_2$—$C(R^{12})(R^{13})$—$CH_{20}$—,

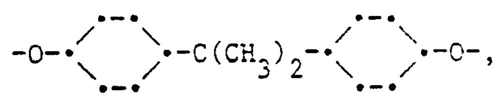

$(—OCH_2)_3C—R^{14}$, $(—OCH_2)_4C$ ou $(—OCH_2)_3C—CH_2—O—CH_2—C(CH_2O—)_3$, $R^{12}$ et $R^{13}$ représentant chacun un alkyle en $C_1$-$C_4$, un alcoxycarbonyle en $C_2$-$C_9$, un cycloalcoxycarbonyle en $C_6$-$C_{13}$, un phényle ou —$NO_2$ ou $R^{12}$ et $R^{13}$ formant-ensemble, et avec l'atome de carbone qui les porte, un radical cyclopenténvle, et $R^{14}$ représentant —$CH_3$ ou —$C_2H_5$.

2. Composition lubrifiante selon la revendication 1 caractérisée en ce que, dans le composé de formule I :

a représente le nombre 0,

b représente un nombre entier de 1 à 4,

R représente —H ou un alcoxycarbonyle en $C_2$-$C_5$,

$R^1$ et $R^2$ représentent chacun, indépendamment l'un de l'autre, un alkyle en $C_3$-$C_{12}$ éventuellement interrompu par un ou deux atomes d'oxygène, un cyclohexyle, un phényle non substitué ou porteur d'un à trois alkyles en $C_1$-$C_{12}$, ou un benzyle, ou encore forment ensemble un radical bivalent répondant à la formule II :

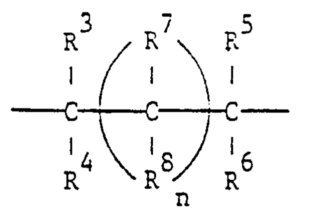

(II)

dans laquelle

n est égal à 0 ou à 1,

$R^3$, $R^4$, $R^5$ et $R^6$ représentent chacun, indépendamment l'un de l'autre, —H, —$CH_3$ ou —$C_2H_5$, et

$R^7$ et $R^8$ représentent chacun, indépendamment l'un de l'autre, —H, un alkyle en $C_1$-$C_4$, un phényle, —$NO_2$ ou un alcoxycarbonyle en $C_2$-$C_9$, ou encore $R^7$ et $R^8$ forment ensemble, et avec l'atome de carbone auquel ils sont liés, un cycle de cyclohexène, et

X représente : lorsque b est égal à 1 : un radical —$OR^9$ ou un radical —$N(R^{10})(R^{11})$ dans lesquels $R^9$ représente —H, un alkyle en $C_1$-$C_{13}$ ou un cycloalkyle en $C_6$-$C_9$, et $R^{10}$ et $R^{11}$ représentent chacun —H ou forment ensemble un radical alkylène en $C_4$-$C_6$ qui constitue un hétérocycle avec l'atome d'azote qui les porte et qui est éventuellement interrompu par un atome d'oxygène, de soufre ou d'azote, et

lorsque b est supérieur à 1 : un radical multivalent de formule —$OC_mH_{2m}O$— dont la partie $C_mH_{2m}$ peut être interrompue par un ou deux atomes d'oxygène ou de soufre et dont l'indice m désigne un nombre de 4 à 6, ou encore un radical —$OCH_2$—$C(R^{12})(R^{13})$—$CH_{20}$—, $(—OCH_2)_3C—R^{14}$ ou $(—OCH_2)_4C$ où $R^{12}$ et $R^{13}$ représentent chacun un alkyle en $C_1$-$C_4$ ou un alcoxycarbonyle en $C_2$-$C_4$, ou encore $R^{12}$ et $R^{13}$ forment ensemble, et avec l'atome de carbone auquel ils sont liés, un cycle cyclopenténvle, et $R^{14}$ représente un radical —$CH_3$ ou —$C_2H_5$.

3. Composition lubrifiante selon la revendication 2 caractérisée en ce que dans le composé de formule I :

a et b ont les significations données à la revendication 2,

R représente —H,

$R^1$ et $R^2$ représentent chacun, indépendamment l'un de l'autre, un alkyle en $C_3$-$C_{12}$, un cyclohexyle

ou un phényle non substitué ou porteur d'un à trois alkyles en $C_1$-$C_{12}$, ou encore $R^1$ et $R^2$ forment ensemble un radical bivalent de formule II dans lequel n désigne le nombre 1, $R^3$, $R^4$, $R^5$ et $R^6$ représentent chacun —H, et $R^7$ et $R^8$ représentent chacun un alkyle en $C_1$-$C_4$ ou un alcoxycarbonyle en $C_2$ ou $C_3$, et

X représente : quand b est égal a 1 : un radical —$OR^9$ ou un radical —$N(R^{10})(R^{11})$ dans lesquels $R^9$ représente —H, un alkyle en $C_1$-$C_{13}$ ou un cycloalkyle en $C_6$-$C_9$, et $R^{10}$ et $R^{11}$ représentent chacun —H, un alkyle en $C_1$-$C_{13}$ ou un cycloalkyle en $C_6$-$C_9$, et $R^{10}$ et $R^{11}$ représentent chacun —H ou forment ensemble, et avec l'atome d'azote auquel ils sont liés, un radical morpholine, thiomorpholino, pipérazino ou méthyl-4 pipérazino, et

quand b est supérieur à 1 : un radical multivalent de formule —$OC_mH_{2m}O$— dont l'indice m désigne un nombre entier de 4 à 6, de formule $(—O—C_2H_4)_2O$ ou de formule $(—OCH_2)_4C$.

4. Composition lubrifiante selon la revendication 1 caractérisée en ce que, dans le composé de formule I, X représente, lorsque b est égal à 1, un radical —$OR^9$ et, dans le cas où b est supérieur à 1, un radical multivalent de formule —$OC_mH_{2m}O$— (dans lequel m a la signification donnée à la revendication 1) ou un radical de formule : —$OCH_2$—$C(R^{12})(R^{13})$—$CH_{20}$—,

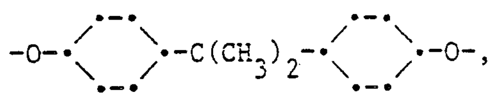

$(—OCH_2)_3C—R^{14}$, $(—OCH_2)_4C$ ou $(—OCH_2)_3C—CH_2—O—CH_2—C(CH_2O—)_3$ et $R^9$, $R^{12}$, $R^{13}$, $R^{14}$ et m ont les significations données à la revendication 1.

5. Composition lubrifiante selon la revendication 1 caractérisée en ce que, dans le composé de formule 1, b est égal à 1.

6. Composition lubrifiante selon la revendication 1 caractérisée en ce que l'huile de base a) contient de 0,05 à 5 % en poids, par rapport à elle-même , du composé de formule I.

7. Composition lubrifiante selon la revendication 1 caractérisée en ce qu'elle contient, comme additif supplémentaire pour lubrifiants, un additif de ce genre pris dans l'exemple constitué par les antioxydants, les passivants de métaux, les inhibiteurs de corrosion, les améliorateurs d'indice de viscosité, les abaisseurs de point de congélation, les dispersants, les détergents et les épaississants, ainsi que d'autres agents anti-usures, hautes pressions et réducteurs de frottement connus, ou un mélange de plusieurs de ces substances.

8. Application d'au moins un composé de formule I selon la revendication 1 comme additif pour lubrifiant.

9. Application selon la revendication 8 caractérisée en ce que les composés de formule 1 sont ajoutés à l'huile de base isolément ou en mélange.